# EUROPÄISCHE PATENTSCHRIFT

(11) **EP 2 689 060 B1**
(45) Veröffentlichungstag und Bekanntmachung des Hinweises auf die Patenterteilung: **29.06.2016**
(21) Anmeldenummer: 12710934.6
(22) Anmeldetag: 22.03.2012
(51) Int. Cl.: B32B 37/06, D04H 1/54, D06C 23/04, F26B 13/16, D04H 1/49

(54) **EINRICHTUNG ZUR VERFESTIGUNG EINES TEXTILEN PRODUKTES MITTELS HEIßEN GASEN**
DEVICE FOR BONDING TEXTILE PRODUCTS BY MEANS OF HOT GASES
DISPOSITIF DE CONSOLIDATION D'UN PRODUIT TEXTILE AU MOYEN DE GAZ CHAUDS

(30) Priorität: 23.03.2011 DE 202011004335 U
(43) Veröffentlichungstag der Anmeldung: 29.01.2014
(73) Patentinhaber: Trützschler Nonwovens GmbH, 63329 Egelsbach (DE)
(72) Erfinder: MÜNSTERMANN, Ullrich, 63329 Egelsbach (DE)
(74) Vertreter: dompatent von Kreisler Selting Werner - Partnerschaft von Patent- und Rechtsanwälten mbB
(86) Internationale Anmeldenummer: PCT/EP2012/055148
(87) Internationale Veröffentlichungsnummer: WO 2012/127013

(56) Entgegenhaltungen:
- EP-A1- 0 511 025
- EP-A2- 0 105 730
- WO-A1-95/06769
- WO-A2-03/008691
- DE-A1- 2 425 738
- DE-A1-102007 053 030
- US-A- 3 750 237
- US-A1- 2008 066 275

## Beschreibung

Die Erfindung betrifft eine Einrichtung zur Verfestigung eines textilen Produktes mittels heißen Gasen gemäß dem Oberbegriff von Anspruch 1 und ein Verfahren zum Verfestigen eines bahnförmigen textilen Produktes nach Anspruch 9.

Mittels Trocknereinrichtungen (Bandtrockner, Trommeltrockner) erfolgt das Abführen von Feuchtigkeit einer durch den Trockner geförderten Materialbahn. Als Ofen werden Einrichtungen bezeichnet, durch welche eine Wärmebeaufschlagung der Materialbahn (der Fasern und/oder Filamente) erfolgt. Dadurch kann eine thermische Bearbeitung z.B. von thermoplastischen Fasern eines Vlies erfolgen (Thermobonding) - auch werden mittels einem Ofen in einem Vlies befindliche Bindemittel zum Verfestigen des Vlies aktiviert.

Die DE 101 32 563 A1 beschreibt einen Trockner, bei dem die das bahnförmige textile Produkt tragende Oberfläche mustergebende Öffnungen aufweist. Insbesondere ist eine Vliesbahn um eine Trocknertrommel geschlungen und wird von aufgeheizter Luft durchströmt. Das Vlies wurde zuvor mittels einer hydrodynamischen Beaufschlagung verfestigt und erfährt in dem Trockner eine Abfuhr der bei der Beaufschlagung erfahrenen Feuchtung. Die mustergebenden Öffnungen in der Trocknertrommel hinterlassen eine Zeichnung, da die das Vlies durchströmende Heißluft die Fasern in die mustergebenden Öffnungen zieht.

Aus der DE 694 12 106 T2 ist es bekannt, einen schmelzbare Fasern enthaltenden Stoff durch Dampfstrahlen zu verfestigen. Durch überhitzten Dampf erfolgt ein Anschmelzen / Schmelzen der Fasern, diese verbinden sich und das Fasermaterial ist so verfestigt.

Die DE 10 2007 053 030 A1 zeigt einen Trockner mit integrierter Heißdampfbeaufschlagung, wodurch das aus schmelzbaren Fasern bestehende Vlies sowohl verfestigt als auch strukturiert wird.

Die Erfindung geht somit aus von einer Einrichtung zur Verfestigung eines textilen Produktes mittels heißen Gasen, insbesondere zum Verfestigen eines aus thermisch schmelzbaren Fasern und/oder Filamenten aufweisenden Vlieses, bestehend aus einer innerhalb eines Behandlungsraumes drehbar gelagerten Trommel mit einer durch eine Vielzahl von Öffnungen gasdurchlässig gestalteten Umfangsfläche, welche von der zu verfestigenden Bahn teilweise umschlungen wird, einer der Trommel zugeordneten Absaugung, durch welche die Trommel unter Saugzug gesetzt wird, und einer Heizung zur Erwärmung der aus der Trommel geführten Luft.

Aufgabe der vorliegenden Erfindung ist es, eine gattungsgemäße Einrichtung zu verbessern.

Gelöst wird diese Aufgabe durch die Merkmale der Ansprüche 1 und 9. Vorteilhafte Weiterbildungen der Erfindung ergeben sich aus den Unteransprüchen.

Gemäß der Erfindung ist vorgesehen, dass auf die gasdurchlässig gestaltete Umfangsfläche der Trommel eine während des Verfestigungsvorganges das textile Material mittels einer Vielzahl von Öffnungen prägende Strukturschale aufgezogen ist, wobei diese Öffnungen größer sind als die in der gasdurchlässig gestalteten Umfangsfläche der Trommel, wobei die Öffnungen in der gasdurchlässig gestalteten Umfangsfläche der Trommel (5) im Durchmesser kleiner als 8 mm sind, wobei die Öffnungen (9) in der das Vlies prägenden Strukturschale (8) einen Durchmesser größer 8 mm aufweisen.

Die gasdurchlässig gestaltete Umfangsfläche ist vorzugsweise eine Schicht des Trommelmantels.

Als Weiterbildungen der Erfindung ist vorgesehen:
- die Öffnungen in der gasdurchlässig gestalteten Umfangsfläche der Trommel sind im Durchmesser kleiner 1mm, wobei in diesem Fall die Öffnungen in der das Vlies prägenden Strukturschale einen Durchmesser größer 2 mm, insbesondere mehr als 2,5, vorzugsweise mehr als 5 mm und vorzugsweise kleiner als 20 mm aufweisen. Der Steg zwischen den Öffnungen bzw. den Löchern in der Strukturschale ist vorzugsweise ca. 2 mm breit.
- die Öffnungen in der gasdurchlässig gestalteten Umfangsfläche der Trommel können alternativ einen Durchmesser kleiner als 5 mm aufweisen.
- die gasdurchlässig gestaltete Umfangsfläche der Trommel kann als Siebgewebe ausgeführt sein. Die Maschenweite des Siebgewebes ist vorzugsweise kleiner als 1 mm. Das Siebgewebe ist vorzugsweise auf einer starren mit Öffnungen versehenen Trommelmantelschicht aufgezogen. Alternativ kann die Strukturschale direkt auf die starre mit Öffnungen versehene Trommelmantelschicht aufgezogen sein. In diesem Fall ist die gasdurchlässig gestaltete Umfangsfläche die mit Öffnungen versehene Trommelmantelschicht.
- die auf der gasdurchlässig gestalteten Umfangsfläche der Trommel aufgespannte Strukturschale ist als ein Öffnungen aufweisendes Blech bzw. Lochblech ausgebildet.
- das Blech weist eine Dicke von mehr als 1 mm, vorzugsweise mehr als 2,5 mm auf.
- innerhalb der Trommel kann ein mit einer Absaugung verbundener Absaugkasten angeordnet sein, der einen gegen die Unterseite des Trommelumfanges gerichteten Saugschlitz aufweist. Alternativ kann die Trommel im Umschlingungsbereich des textilen Produktes, d.h. im Produktbereich, vollflächig untersaugt sein.

Die Umfangsfläche der Trommel weist bspw. eine Bespannung mit einem Siebgewebe auf, wobei die Öffnungen in dem Siebgewebe kleiner als 1 mm sind. Ein üblich bei Thermobondern verwendetes Siebgewebe besitzt pro cm 8/8 Schuss-/Kettfäden (20 mesh-Gewebe), wobei die Drähte einen Durchmesser von 0,4 mm aufweisen. Daraus ergibt sich ein offener Anteil (Durchlässigkeit) von ca. 30%. Ein feineres Siebgewebe ist als 60 mesh-Gewebe ausgeführt, mit 24/22 Schuss-/Kettfäden pro cm.

Bei einer Drahtdicke von 0,19 mm. Hier ergibt sich ein offener Anteil von ca. 30%.

Über das Siebgewebe ist erfindungsgemäß eine Musterfläche bzw. Strukturschale aufgezogen, welche die mustergebenden Öffnungen aufweist. Diese Öffnungen haben bevorzugt einen Durchmesser größer 2 mm - insbesondere größer 5 mm. Unter dem Durchmesser einer Öffnung sei hierbei die kleinste Abmessung verstanden.

Die Musterfläche bzw. Strukturschale ist als ein Blech gefertigt, welches eine Dicke größer 1 mm, vorzugsweise mehr als 2,5 mm aufweist. Dieses Blech bzw. die Strukturschale ist in Form von ein oder mehreren Stücken bzw. Segmenten um den Außenumfang der Trommel geschlungen und gespannt. Die Strukturschale kann somit ein- oder mehrstückig ausgebildet sein. Die Teile bzw. Segmente der mehrstückig ausgebildeten Strukturschale sind vorzugsweise nahtlos aneinandergefügt, so dass keine Nahtabzeichnung in der Warenbahn entstehen, wenn diese auf der Strukturschale verfestigt und geprägt wird. Die Befestigung des oder der Bleche erfolgt mittels Bändern oder sonstig geeigneten Spannmitteln, welche außerhalb des zu verarbeitenden Formates liegen. Es können auch Spannmittel verwendet werden, die in dem Bereich der Arbeitsbreite angeordnet sind, d.h. in dem Bereich, in dem sich die Warenbahn auf der Strukturschale befindet. So können bspw. Spannmittel in der Arbeitsbreitenmitte und an den jeweiligen Außenseiten angebracht sein. In dem fertigen textilen Produkt entstehen aufgrund der innerhalb der Arbeitsbreite angeordneten Befestigungsmittel Abzeichnungen bzw. Markierungen. Diese Abzeichnungen bzw. Markierungen können im fertigen Produkt abgeschnitten werden. So kann bspw. ein Mittelstreifen und die Randstreifen abgeschnitten werden.

Die Erfindung nutzt die Erkenntnis aus, dass ein Vlies aus thermisch schmelzbaren Fasern durch einen mittels der erfindungsgemäßen Trommel durchgeführten Thermobonding-Prozess sowohl verfestigt als auch gleichzeitig strukturiert werden kann. Die mustergebenden Öffnungen der auf die Trommel aufgezogenen Musterfläche bzw. Strukturschale sind bspw. als Kreise oder als gleichmäßig verteilte Sechsecke ausgebildet. Alternativ können die mustergebenden Öffnungen auch Dreiecke, Vierecke oder andere beliebig geformte Öffnungen sein. Durch eine derartige flächige Strukturierung ergibt sich ein verbessertes Erscheinungsbild, ferner lässt sich eine Volumenvergrößerung erzielen.

Die Erfindung wird zur Verfestigung und Strukturierung von Vliesen verwendet, die aus thermisch schmelzbaren Fasern, Filamenten bestehen bzw. diese aufweisen. Es werden auch Mischungen aus Fasern mit verschiedenen Schmelztemperaturen eingesetzt oder Bikofasern der Kern-Mantel-Type. Die Temperatur der Heißgasbeaufschlagung sowie die Durchströmungsrate des Gases durch das Vlies werden dabei entsprechend der verwendeten Fasern, Filamente gewählt.

Bei der erfindungsgemäßen Einrichtung kann es sich um einen sogenannten Omega-Bonder handeln, bei dem die zu beaufschlagende Warenbahn um eine durchlässig gestaltete Durchströmtrommel geführt ist. Auch sind Bondingeinrichtungen möglich, bei denen die zu bearbeitende Warenbahn um mehrere Durchstömtrommeln geführt ist.

Eine Weiterbildung der Erfindung sieht vor, dass innerhalb der die Materialbahn tragenden Trommel eine zusätzliche Absaugeinrichtung angeordnet ist, welche die Heißluft aus dem Behandlungsraum mit einem stärkeren Unterdruck durch die Materialbahn saugt. So lässt sich der strukturgebende Effekt verbessern. Auch kann eine bestehende Einrichtung mit einfachen Mitteln erweitert werden.

Ferner sind bei einem Verfahren zum Verfestigen eines bahnförmigen textilen Produktes mittels heißen Gasen, insbesondere zum Verfestigen eines thermisch schmelzbare Fasern und/oder Filamenten aufweisenden Vlieses, folgende Schritte in vorteilhafter Weise vorgesehen:
- Umschlingen einer in einem mit Heißluft beaufschlagten Behandlungsraum angeordnete, gasdurchlässig gestaltete Durch¬ström¬trommel mit einer Warenbahn, wobei die Durchströmtrommel zumindest eine eine Vielzahl von Öffnungen aufweisende gasdurchlässige Umfangsfläche aufweist und wobei auf der Umfangsfläche eine mit Öffnungen versehene Strukturschale angeordnet ist,
- Anlegen eines Saugzug in der Durchstömtrommel, so dass die Heißluft von dem Behandlungsraum durch die Warenbahn vollflächig gesaugt wird, wobei der Saugzug innerhalb der Durchströmtrommel sowie die Temperatur der Heißluft innerhalb des Behandlungsraumes derart gewählt werden, dass die Warenbahn auf der Strukturschale verfestigt wird und durch die Öffnungen in der Strukturschale eine Prägung erfährt.

Des Weiteren erfolgt die Erläuterung von Ausführungsbeispielen anhand der Zeichnungen.

Es zeigen schematisch:
- Fig. 1: eine Einrichtung zur Verfestigung eines bahnförmigen textilen Produktes mit heißen Gasen,
- Fig. 2: einen vergrößerten Ausschnitt auf die Strukturschale,
- Fig. 3: Schnitt A-A durch die Strukturschablone gemäß Fig. 2
- Fig. 4: den Ausschnitt aus Fig. 3 mit einer auf der Strukturschale angeordneten Warenbahn,
- Fig. 5: eine Einrichtung zur Verfestigung eines bahnförmigen textilen Produktes mit heißen Gasen mit einer zusätzlichen Absaugung,
- Fig. 6: eine Durchströmtrommel mit einer mehrteiligen Strukturschale in Explosionsansicht.

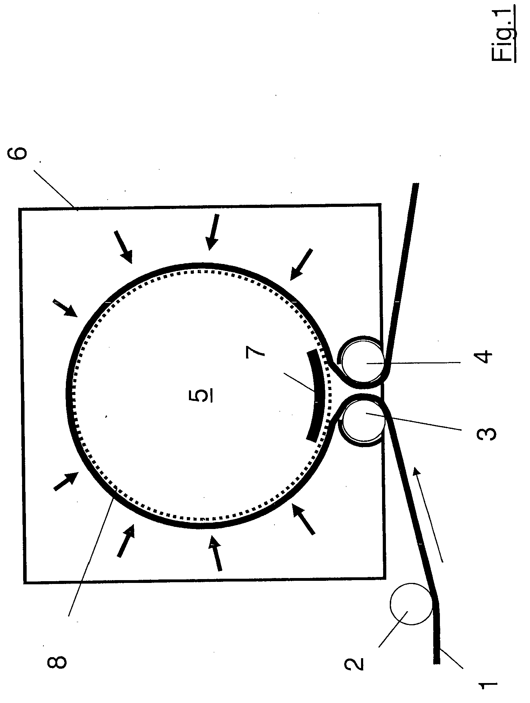

Figur 1 zeigt einen mit Heißluft betriebenen Thermobonder (Thermobond-Ofen) in Omega-Bauweise. Die zu verfestigende Warenbahn 1 läuft in Richtung der Pfeile um Umlenktrommeln 2, 3, 4 geführt um eine große, luftdurchlässig gestaltete Durchströmtrommel 5. Die Durchströmtrommel 5 sowie die beiden, die Warenbahn 1 dem Außenumfang der Durchströmtrommel 5 zuführenden bzw. von dem Außenumfang abnehmenden Trommeln 3, 4 sind in einem den Behandlungsraum bildenden Gehäuse 6 angeordnet, welches über nicht dargestellte Mittel mit heißer Luft beaufschlagbar ist. Die Durchströmtrommel ist drehbar in dem Behandlungsraum angeordnet. Dem Behandlungsraum wird mittels nicht gezeigten Gasbrennern aufgeheizte Luft zugeführt. Diese mittels Gasbrennern aufgeheizte Luft wird über nicht gezeigte und an sich bekannte Gebläse über das Innere der Durchströmtrommel 5 abgesaugt und durchströmt somit auch die zu verfestigende Warenbahn 1. Die Luft kann auch durch eine elektrische Heizung aufgeheizt werden oder durch Wärmetauscher, die mit Dampf und Öl beheizt werden. Die aufgeheizte Luft strömt somit von dem Behandlungsraum durch die auf der Durchströmtrommel angeordnete Warenbahen und die Durchströmtrommel in das Innere der Durchströmtrommel. Mittels einer Abschattung 7 (Blech) im Bereich der Trommeln 3, 4 wird verhindert, dass die Durchströmtrommel 5 auch im nicht von der Warenbahn 1 umschlungenen Teil von der Trocknungsluft durchströmt wird. Die Strömungsrichtung der Heißluft im Inneren des Gehäuses 6 ist mit den Pfeilen angedeutet.

Die Durchströmtrommel weist eine gasdurchlässige Umfangsfläche auf. Diese Umfangsfläche ist eine Schicht des Trommelmantels. Diese Schicht ist vorzugsweise als Siebgewebe ausgebildet. Das Siebgewebe kann auf einer starren mit Öffnungen versehenen Trommelmantelschicht aufgezogen sein.

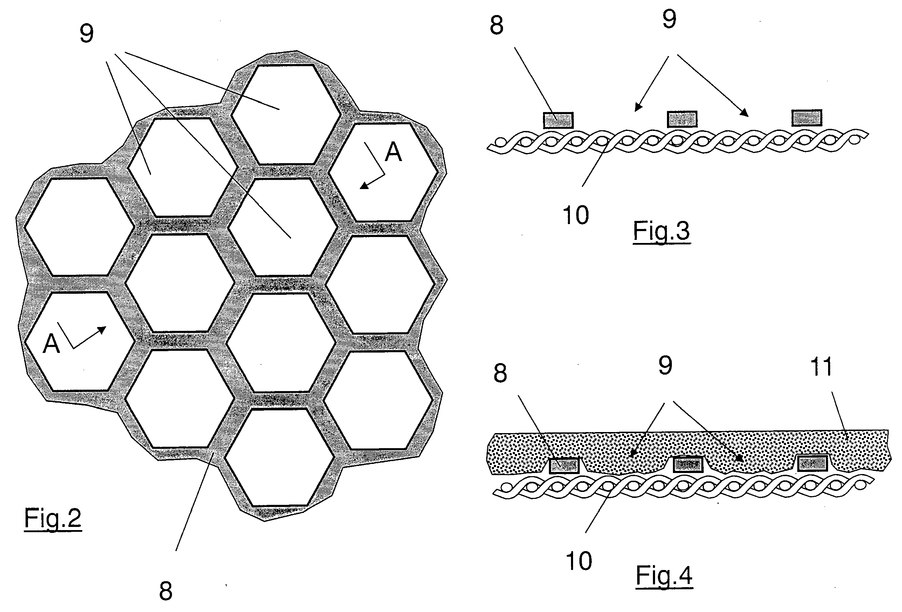

Auf der Umfangsfläche ist eine Strukturschale bzw. Strukturschablone 8 aufgezogen. Figur 2 zeigt einen vergrößerten Ausschnitt der Draufsicht auf den Außenumfang der Durchströmtrommel 5 aufgezogenen Strukturschablone 8. Es handelt sich bei dem gezeigten Ausführungsbeispiel um ein Blech von 3 mm Dicke, in welches wabenförmige Öffnungen 9 eingestanzt sind.

Den Schnitt A-A durch die Strukturschablone 8 nach Figur 2 zeigt die Figur 3. Figur 3 zeigt, dass die Durchströmtrommel 5 an ihrem Außenumfang bzw. als Umfangsfläche einen Aufzug in Form des Siebgewebes 10 besitzt, welches gasdurchlässig ist und auf Grund der Dicke von Schuss- und Kettdraht sowie der Webdichte Öffnungen in der Größenordnung < 1 mm aufweist. Auf dieses Siebgewebe ist das Blech der Strukturschablone 8 aufgezogen. Die Öffnungen 9 der Strukturschablone 8 weisen einen Durchmesser > 5 mm auf. Bei Versuchen ergab sich mit wabenförmigen Öffnungen 9 und einem Durchmesser von 10 mm ein besonders gefälliges Bild. Auch konnte eine mess- und fühlbare Volumenvergrößerung erzielt werden.

Das Siebgewebe kann auf einer starren mit Öffnungen versehenen Trommelmantelschicht aufgezogen sein. Diese starre mit Öffnungen versehene Trommelmantelschicht besteht vorzugsweise aus einem zu einer Trommel geformten Blech, in das Öffnungen eingebracht worden sind.

Alternativ kann das Siebgewebe weggelassen werden, so dass die Strukturschale direkt auf der starren mit Öffnungen versehenen Trommelmantelschicht aufgezogen ist. In diesem Fall ist die starre mit Öffnungen versehene Trommelmantelschicht die gasdurchlässige Umfangsfläche. In diesem Fall weisen die Öffnungen der starren Trommelmantelschicht einen Durchmesser kleiner als 8 mm, vorzugsweise kleiner als 5 mm auf. Die Strukturschale weist in diesem Fall Öffnungen größer als 8 mm auf.

Figur 4 zeigt die Wirkung der Strukturschablone 8 sowie des Siebgewebes 10 auf das Vlies 11 (die Warenbahn 1 gemäß Figur 1) während der Durchströmung von heißer Luft. Das Vlies 11 besteht aus thermisch schmelzbaren Fasern und wurde mittels einer nicht dargestellten Krempel als ein Flor vor dem hier beschriebenen Thermobonder gebildet. Der Saugzug innerhalb der Durchströmtrommel 5 sowie die Temperatur der Luft innerhalb des Behandlungsraumes 6 sind derartig gewählt, dass das Vlies 11 bzw. die Warenbahn durch das durch die Durchströmung bewirkte Anschmelzen der Fasern im gewünschtem Maß verfestigt wird. Dabei erfährt das Vlies 11 bzw. die Warenbahn auf der am Blech der Strukturschablone 8 aufliegenden Oberfläche eine Prägung. Innerhalb der Öffnungen 9 der Strukturschablone 8 wird das Fasermaterial bis zu dem als Sperrschicht wirkenden Siebgewebe 10 tiefgezogen. Durch die Sperrwirkung des gasdurchlässigen Siebgewebes 10 bekommt das Vlies 11 eine hinreichend glatte Oberfläche, Ausfransungen im Oberflächenbereich werden vermieden.

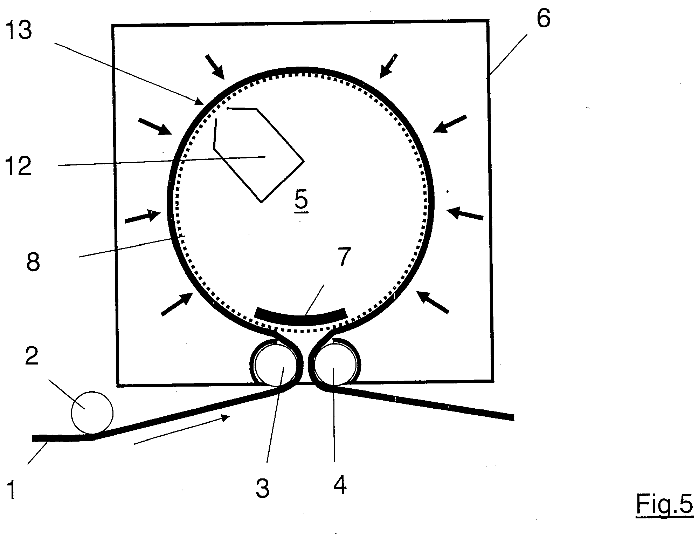

Eine Weiterbildung der Erfindung zeigt Figur 5. Innerhalb der Durchströmtrommel 5 ist ein Absaugkasten 12 angeordnet, der einen gegen die Unterseite des Trommelumfanges gerichteten Saugschlitz 13 aufweist. Der Saugschlitz 13 reicht über die Arbeitsbreite der Durchströmtrommel 5. Der Absaugkasten 12 ist über Leitungen mit einer Absaugung verbunden und wird durch diese mit Unterdruck beaufschlagt. Die abgesaugte Luft wird dem Behandlungsraum wieder zugeführt.

Der im Absaugkasten 12 erzeugte Unterdruck kann somit höher sein als der durch den Ventilator in der Durchströmtrommel 5 erzeugte Unterdruck. So lässt sich die strukturierende Wirkung weitestgehend unabhängig von der Verfestigung gezielt verstärken. Ein bestehender Thermobonder kann in einfacher Weise mit einer derartigen Absaugung nachgerüstet werden.

Die in den Figuren gezeigte Strukturschale 8 kann ein- oder mehrstückig ausgeführt sein.

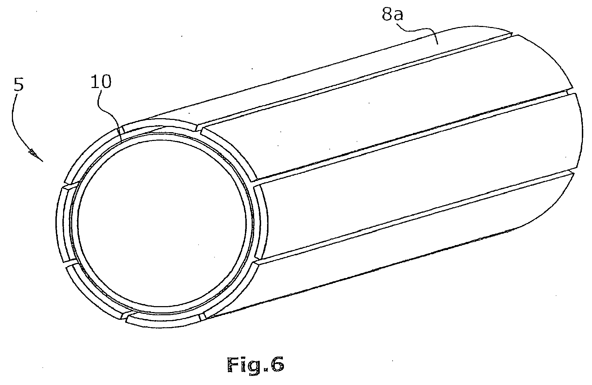

In Fig. 6 ist eine Durchstömtrommel 5 mit einer mehrstückigen Strukturschale 8 dargestellt, wobei die Strukturschale 8 als Explosionsdarstellung gezeigt ist. Die Durchströmtrommel 5 und die Strukturschale 8 sind, so wie in den Figuren 1-5 lediglich schematisch dargestellt. Zur Vereinfachung sind die Öffnungen in der Strukturschale 8 und in der gasdurchlässigen Umfangsfläche der Durchströmtrommel 5 nicht dargestellt.

Die einzelnen Teile der Strukturschale 8 bilden Segmente 8'. Die Segmente 8' werden derart aneinander gefügt, dass keine Nahtabzeichnungen in einem auf der Strukturschale 8 verfestigten und geprägten Vlies 11 durch die Verbindungsstellen zwischen den einzelnen Teilen der Strukturschale 8 entstehen. Die einzelnen Segmente 8' werden somit nahtlos aneinander gefügt, so dass es keine Nahtabzeichnung in einem auf der Strukturschale 8 verfestigten und geprägten Vlies 11 gibt. In der Figur 6 ist eine Strukturschale 8 dargestellt, die aus sechs Segmenten 8' besteht. Die Segmente 8' werden mittels nicht dargestellten Befestigungsmitteln, wie z.B. Bändern oder sonstigen Spannmitteln, an der Durchströmungstrommel 5 befestigt. Die einzelnen Segmente 8' der Strukturschale 8 sind kurz vor dem Zusammenfügen dargestellt, so dass die einzelnen Segmente 8' einen kleinen Abstand zueinander und zu dem Siebgewebe 10 aufweisen.

### Bezugszeichenliste:

- 1: Warenbahn, Materialbahn, Vliesbahn
- 2: Trommel, Umlenktrommel
- 3: Trommel, Umlenktrommel
- 4: Trommel, Umlenktrommel
- 5: Trommel, Durchströmtrommel
- 6: Gehäuse, Behandlungsraum
- 7: Abschattung (Blende)
- 8: Strukturschablone, Blech, Strukturschale,
- 8': Segmente der Strukturschale,
- 9: Öffnung (Strukturschablone 8)
- 10: Siebgewebe
- 11: Vlies
- 12: Absaugkasten
- 13: Saugschlitz

## Patentansprüche

1. Einrichtung zur Verfestigung eines bahnförmigen textilen Produktes mittels heißen Gasen, insbesondere zum Verfestigen eines aus thermisch schmelzbaren Fasern und/oder Filamenten aufweisenden Vlieses, mit
- einer innerhalb eines mit Heißluft beaufschlagten Behandlungsraumes drehbar gelagerten Trommel mit einer durch eine Vielzahl von Öffnungen gasdurchlässig gestalteten Umfangsfläche, welche von der zu verfestigenden Bahn teilweise umschlungen wird,
- einer der Trommel zugeordneten Absaugung, durch welche die Trommel unter Saugzug gesetzt wird, so dass die Heißluft aus dem Behandlungsraum durch die zu verfestigende Warenbahn strömt, und
- einer Heizung zur Erwärmung der aus der Trommel geführten Luft,
**dadurch gekennzeichnet,**
**dass** auf die gasdurchlässig gestaltete Umfangsfläche der Trommel (5) eine während des Verfestigungsvorganges das textile Produkt (1, 11) mittels einer Vielzahl von Öffnungen (9) prägende Strukturschale (8) aufgezogen ist, wobei diese Öffnungen (9) größer sind als die Öffnungen in der gasdurchlässig gestalteten Umfangsfläche der Trommel (5),
wobei die Öffnungen in der gasdurchlässig gestalteten Umfangsfläche der Trommel (5) im Durchmesser kleiner als 8 mm sind, wobei die Öffnungen (9) in der das Vlies prägenden Strukturschale (8) einen Durchmesser größer 8 mm aufweisen.

2. Einrichtung nach Anspruch 1, **dadurch gekennzeichnet, dass** die gasdurchlässig gestaltete Umfangsfläche der Trommel (5) als ein Siebgewebe (10) ausgeführt ist.

3. Einrichtung nach Anspruch 1 oder 2, **dadurch gekennzeichnet, dass** die auf der gasdurchlässig gestalteten Umfangsfläche der Trommel (5) aufgespannte Strukturschale (8) als ein Öffnungen (9) aufweisendes Blech ausgebildet ist.

4. Einrichtung nach Anspruch 3, **dadurch gekennzeichnet, dass** das Blech (8) eine Dicke von mehr als 1 mm, vorzugsweise mehr als 2,5 mm, aufweist.

5. Einrichtung nach einem der vorhergehenden Ansprüche, **dadurch gekennzeichnet, dass** innerhalb der Trommel (5) ein mit einer Absaugung verbundener Absaugkasten (12) angeordnet ist, der einen gegen die Unterseite des Trommelumfanges gerichteten Saugschlitz (13) aufweist.

6. Einrichtung nach einem der vorhergehenden Ansprüche, **dadurch gekennzeichnet, dass** die Strukturschale einstückig ausgebildet ist.

7. Einrichtung nach einem der vorhergehenden Ansprüche, **dadurch gekennzeichnet, dass** die Strukturschale mehrstückig ausgebildet ist.

8. Einrichtung nach Anspruch 7, **dadurch gekennzeichnet, dass** die mehrstückig ausgebildete Strukturschale mehrere Segmente aufweist, wobei die einzelnen Segmente der Strukturschale derart zusammengefügt sind, dass in der auf der Strukturschale verfestigten und geprägten Warenbahn keine Nahtabzeichnungen entstehen.

9. Verfahren zum Verfestigen eines bahnförmigen textilen Produktes mittels heißen Gasen, insbesondere zum Verfestigen eines thermisch schmelzbare Fasern und/oder Filamenten aufweisenden Vlieses, durch
- Umschlingen einer in einem mit Heißluft beaufschlagten Behandlungsraum angeordnete, gasdurchlässig gestaltete Durchströmtrommel mit einer Warenbahn, wobei die Durchströmtrommel zumindest eine eine Vielzahl von Öffnungen (9) aufweisende gasdurchlässige Umfangsfläche aufweist und wobei auf der Umfangsfläche eine mit Öffnungen (9) versehene Strukturschale (8) angeordnet ist,
- Anlegen eines Saugzug in der Durchstömtrommel, so dass die Heißluft von dem Behandlungsraum durch die Warenbahn gesaugt wird, wobei der Saugzug innerhalb der Durchströmtrommel sowie die Temperatur der Heißluft innerhalb des Behandlungsraumes derart gewählt werden, dass die Warenbahn auf der Strukturschale (8) verfestigt wird und durch die Öffnungen (9) in der Strukturschale (8) eine Prägung erfährt, wobei die Öffnungen in der gasdurchlässig gestalteten Umfangsfläche der Trommel (5) im Durchmesser kleiner als 8 mm sind, wobei die Öffnungen (9) in der das Vlies prägenden Strukturschale (8) einen Durchmesser größer 8 mm aufweisen.

## Claims

1. A device for bonding a web-shaped textile product by means of hot gases, particularly for bonding a nonwoven comprising thermally meltable fibers and/or filaments, comprising
- a drum supported for rotation in a treatment chamber subjected to hot air, said drum comprising a peripheral surface that is gas-permeable via a plurality of openings and has the to-be-solidified web partially wrapped around it,
- a suction device assigned to the drum and operative to subject the drum to a suction draft so that the hot air is caused to flow from the treatment chamber through to-be-solidified material web, and
- a heating device for heating the air conducted out from the drum,
**characterized in**
**that** said gas-permeable peripheral surface of the drum (5) has a structuring shell (8) strung around it for embossing the textile product (1, 11) during the bonding process by means of a plurality of openings (9), said openings (9) being larger than the openings in the gas-permeable peripheral surface of the drum (5),
wherein the openings in the gas-permeable peripheral surface of the drum (5) are smaller in diameter than 8 mm, wherein the openings (9) in the structuring shell (8) for embossing the nonwoven have a diameter larger than 8 mm.

2. The device according to claim 1, **characterized in that** the gas-permeable peripheral surface of the drum (5) is designed as a sieve cloth (10).

3. The device according to claim 1 or 2, **characterized in that** structuring shell (8) strung around the gas-permeable peripheral surface of the drum (5) is formed as a metal sheet with openings (9).

4. The device according to claim 3, **characterized in that** said metal sheet (8) has a thickness of more than 1 mm, preferably more than 2,5 mm.

5. The device according to any one of the preceding claims, **characterized in that**, internally of the drum (5), a suction box (12) is arranged that is connected to a suction device, said suction box comprising a suction slot (13) directed against the bottom side of the periphery of the drum.

6. The device according to any one of the preceding claims, **characterized in that** the structuring shell is of a one-part design.

7. The device according to any one of the preceding claims, **characterized in that** the structuring shell is of a multi-part design.

8. The device according to claim 7, **characterized in that** said multi-part structuring shell comprises a plurality of segments, wherein the individual segments of the structuring shell are assembled in such a manner that no seam marks will be generated in the material web bonded and embossed on the structuring shell.

9. A method for bonding a web-shaped textile product by means of hot gases, particularly for bonding a nonwoven comprising thermally meltable fibers and/or filaments, by
- wrapping a material web around a gas-permeable flow-through drum arranged in a treatment chamber subjected to hot air, wherein said flow-through drum comprises at least one gas-permeable peripheral surface having a plurality of openings (9) and wherein said peripheral surface has arranged on it a structuring shell (8) provided with openings (9),
- applying a suction draft in the flow-through drum so that the hot air is sucked from the treatment chamber through the material web, wherein said suction draft within the flow-through drum and the temperature of the hot air internally of the treatment chamber are selected in such a manner that the material web is bonded on the structuring shell (8) and is embossed by means of the openings (9) in the structuring shell (8), wherein the openings in the gas-permeable peripheral surface of the drum (5) are smaller in diameter than 8 mm, wherein the openings (9) in the structuring shell (8) for embossing the nonwoven have a diameter larger than 8 mm.

## Revendications

1. Dispositif de consolidation d'un produit textile en bande à l'aide de gaz chauds, en particulier pour la consolidation d'un non-tissé présentant des fibres et/ou filaments thermofusibles, avec
- un tambour logé de manière à pouvoir tourner dans un espace de traitement alimenté en air chaud avec une surface périphérique conçue de manière perméable aux gaz par une pluralité d'ouvertures, laquelle surface est enroulée en partie par la bande à consolider,
- une aspiration associée au tambour, par laquelle le tambour est placé sous tirage par aspiration de sorte que l'air chaud passe hors de l'espace de traitement par la bande de marchandises à consolider, et
- un chauffage pour chauffer l'air guidé du tambour,
**caractérisé en ce que**
une coque structurelle (8) estampant pendant le processus de consolidation le produit textile (1, 11) à l'aide d'une pluralité d'ouvertures (9) est tendue sur la surface périphérique conçue de manière perméable aux gaz du tambour (5), ces ouvertures (9) étant plus grandes que les ouvertures dans la surface périphérique conçue de manière perméable aux gaz du tambour (5),
le diamètre des ouvertures dans la surface périphérique conçue de manière perméable aux gaz du tambour (5) étant inférieur à 8 mm, les ouvertures (9) présentant dans la coque structurelle (8) estampant le non-tissé un diamètre supérieur à 8 mm.

2. Dispositif selon la revendication 1, **caractérisé en ce que** la surface périphérique conçue de manière perméable aux gaz du tambour (5) est réalisée comme un tissu de tamisage (10).

3. Dispositif selon la revendication 1 ou 2, **caractérisé en ce que** la coque structurelle (8) serrée sur la surface périphérique conçue de manière perméable aux gaz du tambour (5) est réalisée comme une tôle présentant des ouvertures (9).

4. Dispositif selon la revendication 3, **caractérisé en ce que** la tôle (8) présente une épaisseur de plus d'1 mm, de préférence de plus de 2,5 mm.

5. Dispositif selon l'une quelconque des revendications précédentes, **caractérisé en ce qu'**une boîte d'aspiration (12) reliée à une aspiration est agencée dans le tambour (5), laquelle boîte présente une fente d'aspiration (13) dirigée contre le côté inférieur de la périphérie de tambour.

6. Dispositif selon l'une quelconque des revendications précédentes, **caractérisé en ce que** la coque structurelle est réalisée d'un seul tenant.

7. Dispositif selon l'une quelconque des revendications précédentes, **caractérisé en ce que** la coque structurelle est réalisée en plusieurs parties.

8. Dispositif selon la revendication 7, **caractérisé en ce que** la coque structurelle réalisée en plusieurs parties présente plusieurs segments, les segments individuels de la coque structurelle étant assemblés de telle manière qu'aucun dessin de soudure n'apparaisse dans la bande de marchandises estampée et consolidée sur la coque structurelle.

9. Procédé de consolidation d'un produit textile en forme de bande à l'aide de gaz chauds, en particulier pour la consolidation d'un non-tissé présentant des fibres et/ou filaments thermofusibles, par
- l'enroulement d'un tambour de passage conçu de manière perméable aux gaz, agencé dans un espace de traitement alimenté en air chaud avec une bande de marchandises, le tambour de passage présentant au moins une surface périphérique perméable aux gaz présentant une pluralité d'ouvertures (9) et une coque structurelle (8) pourvue d'ouvertures (9) étant agencée sur la surface périphérique,
- l'application d'un tirage par aspiration dans le tambour de passage de sorte que l'air chaud de l'espace de traitement soit aspiré par la bande de marchandises, le tirage par aspiration dans le tambour de passage ainsi que la température de l'air chaud dans l'espace de traitement étant choisis de telle manière que la bande de marchandises soit consolidée sur la coque structurelle (8) et subisse un estampage par les ouvertures (9) dans la coque structurelle (8), le diamètre des ouvertures dans la surface périphérique conçue de manière perméable aux gaz du tambour (5) étant inférieur à 8 mm, les ouvertures (9) dans la coque structurelle (8) estampant le non-tissé présentant un diamètre supérieur à 8 mm.
